# EUROPEAN PATENT SPECIFICATION

(11) **EP 3 192 754 B1**
(45) Date of publication and mention of the grant of the patent: **20.06.2018**
(21) Application number: 16382011.1
(22) Date of filing: 13.01.2016
(51) Int. Cl.: B65G 17/06, B65G 17/16, B65G 47/38, B65G 45/10

(54) **METAL PLATE CONVEYOR FOR HOT SLAG**
METALLPLATTENFÖRDERER FÜR HEISSE SCHLACKEN
TRANSPORTEUR DE PLAQUE MÉTALLIQUE DE SCORIES CHAUDES

(43) Date of publication of application: 19.07.2017
(73) Proprietor: Befesa Aluminio, S.L., 48950 Erandio, BIZKAIA (ES)
(72) Inventor: MIRONES VITINI, Carlos, 39660 CASTAÑEDA-CANTABRIA (ES)
(74) Representative: Carvajal y Urquijo, Isabel

(56) References cited:
- WO-A1-2013/037376
- DE-B- 1 041 417
- DE-B- 1 246 544
- US-A- 2 892 265

## Description

### FIELD OF THE INVENTION

The present invention is referred to a metal plate conveyor for hot salt slag according to the preamble of claim 1. The conveyor of the invention is applicable, for example, for receiving and transporting salt slag generated in the aluminum recovery process in tilting rotary furnaces to a rotary cooler.

### BACKGROUND OF THE INVENTION

Salt slag generated in the tilting rotary furnaces during the recovery process of secondary aluminum, leaving them in "pasty" state at about 800° C, and collected in boxes of 1500 to 2000 kg of capacity, with the inconveniences of managing these boxes, with slag at such temperatures, inside the production halls.

So far, in order to cool these slags down, to load them into trucks and to send them to an "Authorized Processor" there is not a conveyor that continuously evacuates them to a cooler without the slags getting stuck on the conveyor metal plates or compacted when attempts have been made to employ horizontal vibrating conveyors.

As a result of this, in all the furnaces in operation hot salt slags are collected in boxes and to cool those down two procedures are employed:
a) Slags are allowed to cool down in those boxes, generating, in any case, a lot of dust when cold boxes are tilted over and the large slag blocks, that are formed while cooling in the boxes, are broken. As the cooling time in boxes takes more than one day, a large number of them, which are expensive and of not very long life, is required.
b) The boxes are emptied whilst the slag is still red-hot. Thus fewer boxes are consumed and no block breaking is required, but it is necessary to extend the slag on the ground for an as fast as possible cooling so no slabs are formed, but this operation generates smoke, that is difficult to control, and dust.

Document DE 1041 417 discloses a metal plate conveyor according to the preamble of claim 1.

### DESCRIPTION OF THE INVENTION

The present invention is referred to a metal plate conveyor for hot salt slag comprising the features of the appended claim 1. When running over the wheel, once the plate overpasses the vertical tangent line, it falls by its own weight and hits against the stopper bar, causing the breaking and separation of the transported slag.

The plates are hinged by means of a concentric pipe to the shaft that links both chains.

Each plate is slightly larger than the length between two consecutive chain linking shafts, so each plate will partially overlap on the following plate.

As per the previous description, each plate is secured to one chain linking shaft, each two consecutive links of the chain, at least. As the plates are articulated in the advancing edge, when each plate reaches the sprocket wheel it starts to progressively separate from the following and when each plate reaches the wheel vertical tangent line it falls by its own weight and hits against the stopper bar, causing the breaking and separation of any agglomeration of the slag / aluminum mixture that could be formed on the conveyor. These effects occur within the rotary cooler.

### SHORT DESCRIPTION OF THE DRAWINGS

A non-limiting example of a conveyor constructed according to the invention is shown in the attached drawings, where:
- Figure 1 a side elevation view of the conveyor.
- Figure 2 a side view of the conveyor.
- Figure 3 a plant view of the conveyor.
- Figure 4 a perspective view of a section of the conveyor.
- Figures 5 to 7 show elevation, side elevation and plant views of the conveyor plates.
- Figures 8 to 11 show four successive phases of operation of the conveyor.

### DETAILED FABRICATION DESCRIPTION

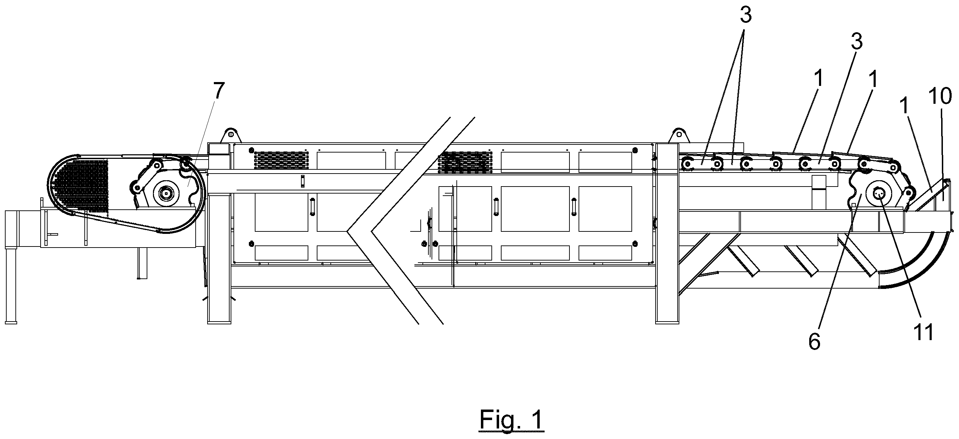

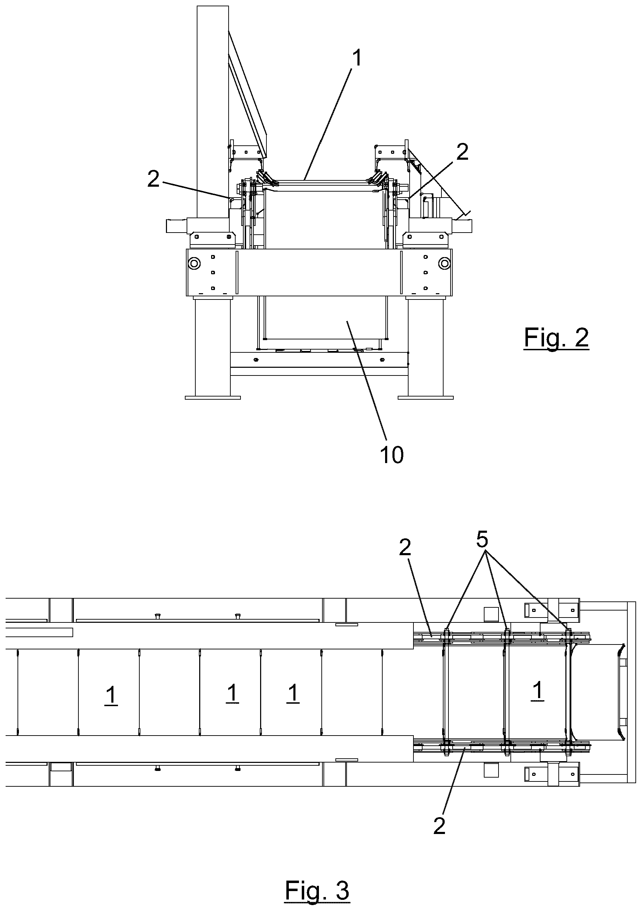

Figures 1 to 7 show the hot slag conveyor metal plates, according to the invention, comprising a series of metal plates (1) mounted on two parallel chains (2) of links (3), articulated through bushings (4) that hold them. The two chains are joined together by concentric passing shafts (5). These chains are supported on rails mounted on a frame and geared to two sprocket wheels with parallel shafts, the head one (6), idle, and a tail one (7) that is the driving and tensioning wheel. Both wheels may have different diameters.

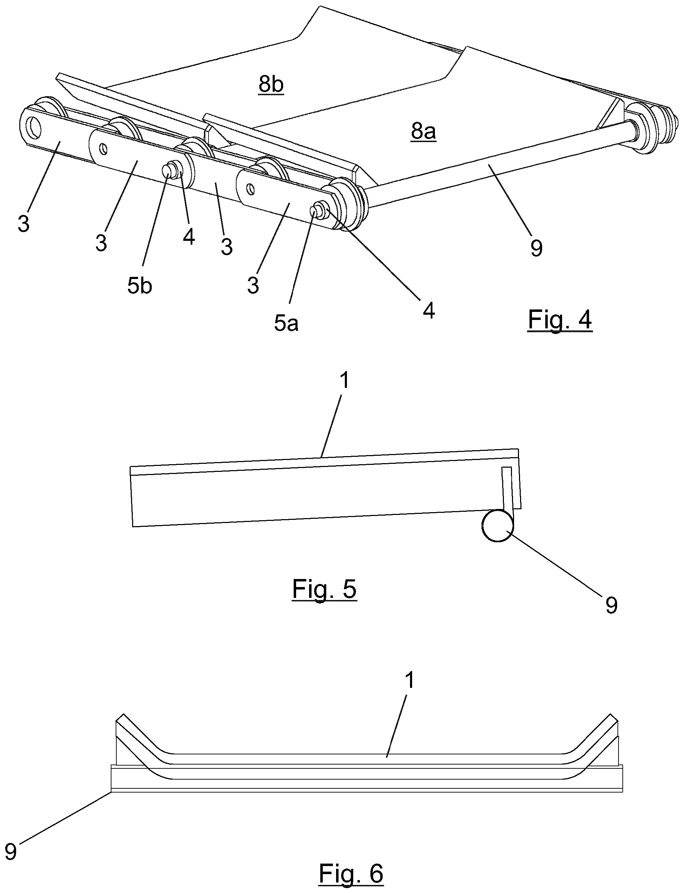

In the example described and as it is better shown in Figures 4 to 7, each plate (1) is slightly larger than twice the length of the links (3), therefore being supported by the next plate and one chain linking shaft (5). A plate, two links and a shaft conform a section (8a, 8b ...) of the conveyor as shown in Figure 4, but it could be fabricated, if necessary, sections that always including a plate (1) and a shaft (5) but that could have more than two links (3); the length of the plates would always be slightly larger than the distance between the shafts (5a-5b) of consecutive sections (8a-8b).

The articulation of the plates (1) on the chain linking shafts (5) occurs by the free rotation of a coaxial thick-walled pipe (9) welded to the plate head edge and therefore being an integral part of it.

The thick walled pipe (9) placed on each plate head (1) can freely rotate around one shaft (5).

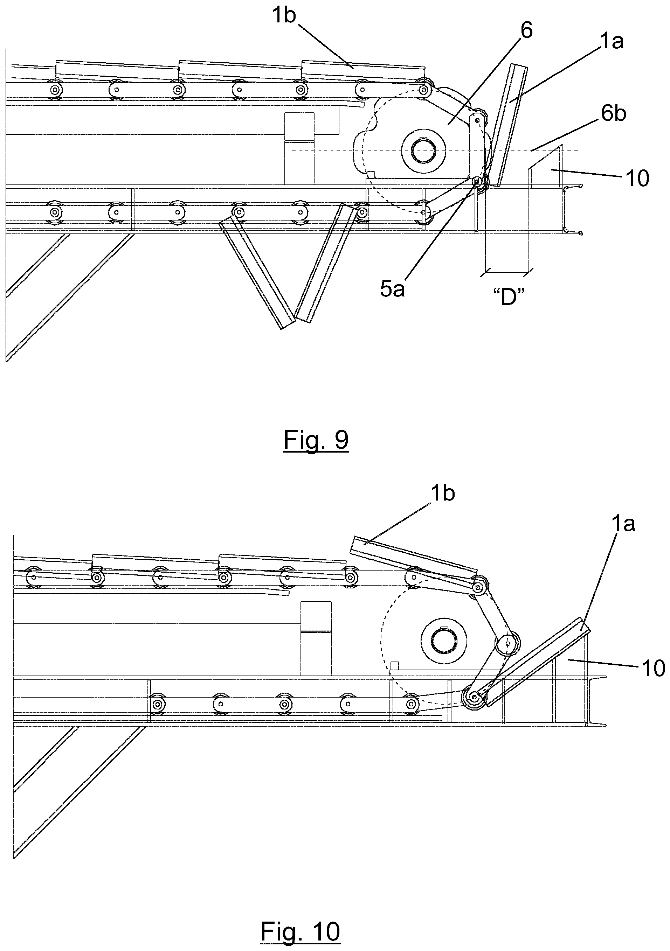

Further of head wheel (6), see Figure 9, there is a stop bar (10) placed perpendicularly to the conveyor axis and approximately at the same height of the horizontal line (6b) passing through its shaft and a distance "D" from the wheel primitive diameter smaller than the length of the plates (1).

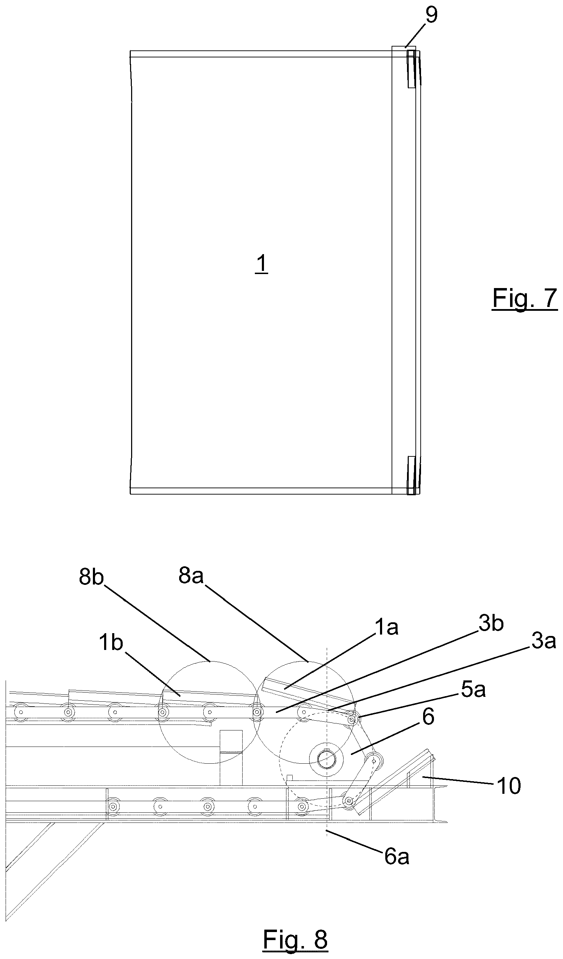

In Figures 8-11 explains how and in what position each plate separates from the following one, forcing the pasty slag that was stuck to them to come unstuck. When the center of the first link (3a) of a section (8a) exceeds the vertical (6a) passing through the center of the head wheel (6), it is forced to remain tangent to the primitive circumference of the same and therefore to form angle with the next link (3b) of the section (8a) forcing the plate of this section to keep the same angle with the plate of the following section (8b), and separating them.

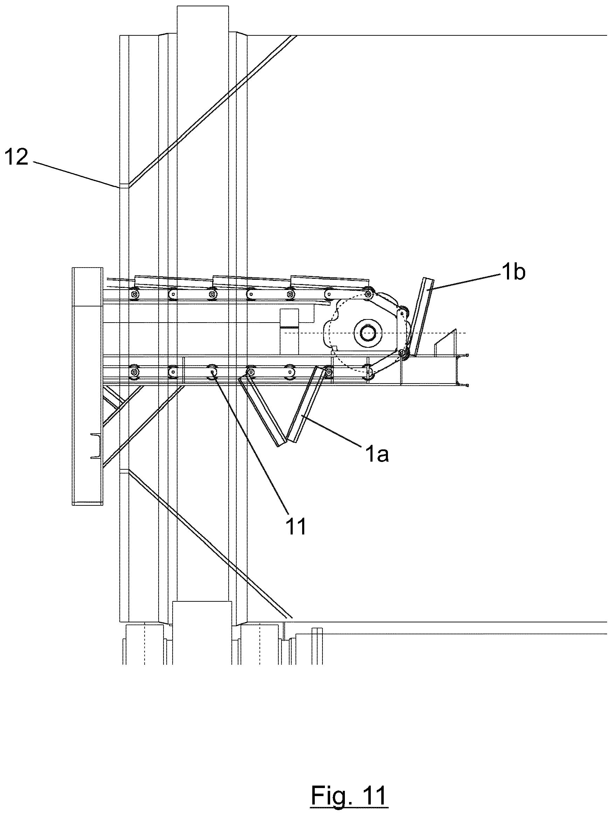

By continuing turning the head wheel (6) shaft goes down (5a) and plate tilting angle is increased (1a), until it reaches the position shown in Figure 9 where shaft (5a) reaches and exceeds the horizontal line (6b) that passes through the center of the head sprocket wheel (6), the plate (1a) falls by its weight to the position in figure 10 hitting against the stopper bar (10) and releasing the slag that could be stuck; impact intensity can be adjusted moving the stop bar closer to or further from the head sprocket . Then, sliding on the stopper bar (10), the plate falls to the position shown in Figure 11. During the return first section, which is inside the rotary cooler, the plates swing freely and hit and beat the previous and the following plates forcing the slag to unstick and falling inside the rotary cooler (12).

The advantages of the proposed system over existing salt slag cooling and handling systems are:
- With the system of the invention no fumes are produced, no dust is produced, slag block breaking is not necessary, mechanical means are no required for handling and loading cold slag in trucks and boxes to collect slags, which are very expensive and short-lived, are not necessary
- The slag, being cooled down and broken in a rotary cooler, when turning in it still in the pasty state, can be transported and stored in silos to be loaded onto trucks and sent to "authorized processor".

## Claims

1. Metal plate conveyor for hot salt slag, comprising a series of consecutive plates (1) mounted on shafts (5) connecting two parallel chains (2) every two or more links (3) and hinged by coaxial pipe with bushings (4) between consecutive chain links; these chains run on rails and are geared to two sprocket wheels, a head one (6), fixed idle, and a tail one (7), tensioning and driving, of parallel shafts, which main features are:
- Each plate (1) with a shaft (5) and at least two links form a section (8a, 8b ......) in which each plate rotates freely on the shaft (5) by its head edge, as the conveyor travels, **characterized in that** downstream of the head sprocket wheel (6), a transverse stopper bar (10) is located at the height of a horizontal axis (6b) passing through the head sprocket wheel axis and at a distance ("D") smaller than the plate (1) length so that the plates (1) fall and hit against the stopper bar (10) during their downward travel over the head sprocket wheel (6).

2. Conveyor according to claim 1, **characterized in that** each plate (1) includes, along its advancing head edge, a thick wall pipe (9) which is coaxial with the shafts (5) that joins the two chains forming a section of two or more links (3).

3. Conveyor according to preceding claims, **characterized in that** each plate (1) has a length slightly larger than the distance between shafts (5a, 5b) of consecutive sections (8a, 8b) protruding off its back and partially overlapping on the following plate.

## Patentansprüche

1. Metallplattenförderer für heiße Salzschlacke, umfassend eine Serie von aufeinanderfolgenden Platten (1), die auf Wellen (5) montiert sind, die zwei parallele Ketten (2) auf jeder zweiten oder mehr Verbindungen (3) verbinden und die durch koaxiale Rohre mit Buchsen (4) zwischen aufeinanderfolgenden Kettengliedern angelenkt sind; wobei diese Ketten auf Schienen laufen und mit zwei Kettenrädern, einem Kopfkettenrad (6), im festen Leerlauf, und einem Heckkettenrad (7), das spannt und antreibt, von parallelen Wellen verzahnt sind, wobei die Hauptmerkmale die folgenden sind:
- Jede Platte (1) mit einer Welle (5) und mindestens zwei Verbindungen bildet einen Abschnitt (8a, 8b), in dem jede Platte frei auf der Welle (5) über ihren Kopfrand dreht, wenn der Förderer bewegt wird, **dadurch gekennzeichnet, dass** sich, nachfolgend auf das Kopfkettenrad (6), eine Anschlagquerstange (10) auf der Höhe einer horizontalen Achse (6b) befindet, die durch die Achse des Kopfkettenrads verläuft und mit einem Abstand ("D"), der kleiner als die Länge der Platte (1) ist, sodass die Platten (1) herunterfallen und gegen die Anschlagstange (10) während ihrer Abwärtsbewegung über das Kopfkettenrad (6) stoßen.

2. Förderer nach Anspruch 1, **dadurch gekennzeichnet, dass** jede Platte (1) entlang ihres vorrückenden Kopfrands ein dickwandiges Rohr (9) einschließt, das koaxial zu den Wellen (5) ist, die die zwei Ketten verbinden, die zwei Abschnitte von zwei oder mehr Verbindungen (3) bilden.

3. Förderer nach den vorhergehenden Ansprüchen, **dadurch gekennzeichnet, dass** jede Platte (1) eine Länge hat, die etwas länger als der Abstand zwischen den Wellen (5a, 5b) von aufeinanderfolgenden Abschnitten (8a, 8b) ist, wodurch sie von der Rückseite hervorsteht und teilweise die folgende Platte überlappt.

## Revendications

1. Convoyeur à plaque métallique pour scories salées chaudes, comprenant un ensemble de plaques consécutives (1) montées sur des arbres (5) reliant deux chaînes parallèles (2) tous les deux ou plusieurs maillons (3) et articulées par un tube coaxial avec des bagues (4) entre des maillons de chaînes consécutifs ;
ces chaînes passent par des rails et sont orientées vers deux roues dentées, une roue avant (6), inactive fixe, et une roue arrière (7), de tension et motrice, d'arbres parallèles, dont les caractéristiques principales sont :
- Chaque plaque (1) avec un arbre (5) et au moins deux maillons forment une section (8a, 8b...) dans laquelle chaque plaque tourne librement sur l'arbre (5) par son bord avant, tandis que le convoyeur se déplace, **caractérisé en ce qu'**en aval de la roue dentée avant (6), une barre d'arrêt transversale (10) est située à la hauteur d'un axe horizontal (6b) passant par l'axe de la roue dentée avant et à une distance (« D ») plus petite que la longueur de la plaque (1) de sorte que les plaques (1) tombent et percutent la barre d'arrêt (10) pendant leur trajectoire descendante sur la roue dentée avant (6).

2. Convoyeur selon la revendication 1, **caractérisé en ce que** chaque plaque (1) comporte, le long de son bord avant progressif, un tube à paroi épais (9) qui est coaxial aux arbres (5) qui relie les deux chaînes formant une section de deux ou plusieurs maillons (3).

3. Convoyeur selon les revendications précédentes, **caractérisé en ce que** chaque plaque (1) a une longueur légèrement plus large que la distance entre les arbres (5a), 5b) de sections consécutives (8a, 8b) faisant saillie de sa partie arrière et partiellement chevauchant la plaque suivante.
